(19) Europäisches Patentamt
European Patent Office
Office européen des brevets

(11) **EP 2 287 748 A1**

(12) **EUROPEAN PATENT APPLICATION**

(43) Date of publication:
**23.02.2011 Bulletin 2011/08**

(51) Int Cl.:
*G06F 17/15* (2006.01)  *H04B 10/08* (2006.01)
*H04S 3/00* (2006.01)

(21) Application number: **09168393.8**

(22) Date of filing: **21.08.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicants:
• **Mitsubishi Electric R&D Centre Europe B.V.**
**20 Frederick Sanger Road**
**The Surrey Research Park**
**Guildford, Surrey GU2 7YD (GB)**
Designated Contracting States:
**GB**
• **Mitsubishi Electric Corporation**
**Chiyoda-ku**
**Tokyo 100-8310 (JP)**
Designated Contracting States:
**AT BE BG CH CY CZ DE DK EE ES FI FR GR HR HU IE IS IT LI LT LU LV MC MK MT NL NO PL PT RO SE SI SK SM TR**

(72) Inventor: **Szajnowski, Dr. Wieslaw Jerzy**
**Guildford, Surrey GU1 2AR (GB)**

(74) Representative: **Wiedemann, Peter**
**Hoffmann - Eitle**
**Patent- und Rechtsanwälte**
**Arabellastrasse 4**
**81925 München (DE)**

(54) **Determination of system characteristics**

(57) An apparatus is disclosed for determining characteristics of a linear system that is either time invariant or varying in time. The apparatus comprises: a probe signal splitter operable to receive a probe signal for probing a system under test, and to split the probe signal into first and second probe signal components such that the second probe signal component is a phase-shifted version of the first probe signal component with a phase difference θ satisfying θ MOD 180˚ < > 0˚; a response signal splitter operable to receive a response signal from the system under test comprising a response of the system to the probe signal, and to split the response signal into first and second response signal components such that the second response signal component is a phase-shifted version of the first response signal component with a phase difference corresponding to the phase difference of the first and second probe signal components; a crosslation calculator operable to perform: a first crosslation calculation using the first response signal component and zero crossings of the second probe signal component to generate a first crosslation result; a second crosslation calculation using the second response signal component and zero crossings of the first probe signal component to generate a second crosslation result; a third crosslation calculation using the first response signal component and zero crossings of the first probe signal component to generate a third crosslation result; and a fourth crosslation calculation using the second response signal component and zero crossings of the second probe signal component to generate a fourth crosslation result; and a calculation unit operable to combine the first, second, third and fourth crosslation results to generate at least one representation of the characteristics of the system. The apparatus is suitable for real-time testing and on-line/in-situ inspection/monitoring the broad class of such diverse physical systems as concert halls, multipath communication channels, construction materials and structures, power and industrial plants, water and contamination distribution in soils, biomedical tissues and many others.

EP 2 287 748 A1

XWR

| TSG | TEL | REL | SCU |

SS   SS   RS   RR

SUT

| SSQ | | RRQ |

SQ   SI   RI   RQ

SQ  RC  **RISQ**  SC  RI

CR1

SI  RC  **RISI**  SC  RI

CI1

SI  RC  **RQSI**  SC  RQ

CR2

SQ  RC  **RQSQ**  SC  RQ

BXL

CR1   CR2   CI1   CI2

| ALU |

PS   PC

| DAN | DEC   DEC

Fig. 3

**Description**

Field of the Invention

This invention relates to a method and apparatus for determining time-domain characteristics of a linear system that is either time invariant or varying in time. The disclosed method represents a new class of time-domain reflectometry (TDR), or time-domain transmissometry (TDT) that can employ wideband excitation signals. The method is applicable to real-time testing and on-line/in-situ inspection/monitoring of a broad class of such diverse physical systems as concert halls, multipath communication channels, construction materials and structures, power and industrial plants, water and contamination distribution in soils, biomedical tissues and many others.

Background of the Invention

It is known that interaction between an electromagnetic or ultrasonic probe (excitation) signal and a system (or medium) under examination can be exploited to obtain useful information about that system. There are two basic classes of techniques employed for studying such signal/system interactions in the time domain:

- time-domain reflectometry (TDR), in which a probe signal reflected by the system is compared with the original probe signal;

- time-domain transmissometry (TDT), in which a probe signal transmitted through the system is compared with the original probe signal.

A linear system is completely specified by its impulse response, i.e. the waveform observable at the output of the system while its input is being excited by a Dirac (delta) impulse. However, a direct application of impulsive excitation is of limited practical use due to a very low average power level of such probing signals, especially when peak-power constraints are to be observed.

A linear system can also be examined with the use of an especially designed probe signal of a non-impulsive appearance. It is advisable that such a signal should be driving a system under test in a persistent manner; furthermore, the signal's frequency components must span the bandwidth of the system. A review of relevant prior-art methods is presented in:

Guy-Bart Stan et al., "Comparison of Different Impulse Response Measurement Techniques", J. Audio Eng. Soc., vol. 50, April 2002.

One type of a suitable probe signal has the form of a constant- amplitude sinusoidal waveform with its frequency varying in time. In particular, as shown in: F. Gran and J. A. Jensen, "Designing Waveforms for Temporal Encoding Using a Frequency Sampling Method", IEEE Trans. Ultrason., Ferroelect., Freq. Contr., vol. 54, Oct. 2007, probe signals having nonlinear frequency modulation can be superior to those with linear frequency modulation.

Another class of useful probe signals can be obtained from various pseudorandom binary sequences widely used in spread-spectrum communications. One specific application of such probe signals to reflectometry is described in: P. Smith, C. Furse and J. Gunther, "Analysis of Spread Spectrum Time Domain Reflectometry for Wire Fault Location", IEEE Sensor Journal, vol. 5, Dec. 2005. Another example is described in US Patent 7,495,450: "Device and Method for Detecting Anomolies in a Wire and Related Sensing Methods", awarded to Furse et al on February 24, 2009.

It is also possible to exploit a band-limited random signal, such as noise, to determine time-domain characteristics of a system under test, as disclosed in a US Patent 7,532,011: "Method and Apparatus for Time Domain Reflection Test of Transmission Line", awarded to Q. Shi on 12 May 2009.

In all the above and also other cases, the response of a system under test is usually determined from some suitable form of correlation analysis, performed either directly in the time domain or, indirectly, in the frequency domain.

Furthermore, existing techniques for determining characteristics of a system suffer from a number of problems. In particular, existing techniques provide only limited information about a system under test.

Summary of the Invention

The inventor in the present application has realised that a complex function of the response of a system under test, including real and imaginary components, can provide useful information on the system, and has devised a method and apparatus for providing the complex response function.

According to the present invention, there is provided a method for determining characteristics of a system, the method comprising: receiving a probe signal for probing a system under test, and generating therefrom first and second probe signal components such that the second probe signal component is a phase-shifted version of the first probe signal component; receiving a response signal comprising the probe signal after interaction with the system under test, and generating from the response signal first and second response signal components such that the second response signal component is a phase-shifted version of the first response signal component; performing a first crosslation calculation using the first response signal component and zero crossings of the second probe signal component to generate a first crosslation result; performing a second crosslation calculation using the second response signal component and zero crossings of the first probe signal component to generate a second crosslation result; performing a third crosslation calculation using the first response signal component and zero crossings of the first probe signal component to generate a third crosslation result; performing a fourth crosslation calculation using the second response signal component and zero crossings of the second probe signal component to generate a fourth crosslation result; and combining the first, second, third and fourth crosslation results to generate at least one representation of the characteristics of the system.

The at least one representation may comprise the difference between the first and second crosslation results or the sum of the third and fourth crosslation results, or it may comprise a representation based on both this difference and sum.

The first and second probe signal components are generated in the same way as the first and second response signal components so that the phase-shift of the second probe signal component relative to the first probe signal component is the same as the phase shift of the second response signal component relative to the first response signal component.

In an embodiment, the received probe signal is passed unamended to generate the first probe signal component (that is, the first probe signal component comprises the probe signal), and a phase-shifted version of the received probe signal is generated to give the second probe signal component. Similarly, in an embodiment, the received response signal is passed unamended to generate the first response signal component, and a phase-shifted version of the received response signal is generated to give the second response signal component.

The first and second probe signal components are preferably orthogonal. Similarly, the first and second response signal components are also preferably orthogonal.

The zero crossings used in each crosslation calculation may be both zero upcrossings and zero downcrossings. Alternatively, they may comprise zero crossings of only one type, namely zero upcrossings alone or zero downcrossings alone. When only one type of zero crossing is used, the timings are preferably defined by the rising and falling edges of a binary signal such that a rising edge defines a zero crossing of one of the first and second probe signal components and a falling edge defines a zero crossing of the other of the first and second probe signal components.

The present invention also provides apparatus operable to determine characteristics of a system, the apparatus comprising: a probe signal splitter operable to split a probe signal for probing a system under test into first and second probe signal components such that the second probe signal component is a phase-shifted version of the first probe signal component; a response signal splitter operable to receive a response signal comprising the probe signal after interaction with the system under test, and operable to split the response signal into first and second response signal components such that the second response signal component is a phase-shifted version of the first response signal component; an analysis result calculation unit operable to: - extract segments of the first response signal component at time instants defined by zero crossings of the second probe signal component, align in time the extracted segments to generate time-aligned segments, combine the time-aligned segments and calculate an average of the time-aligned segments to generate a first analysis result; - extract segments of the second response signal component at time instants defined by zero crossings of the first probe signal component, align in time the extracted segments to generate time-aligned segments, combine the time-aligned segments and calculate an average of the time-aligned segments to generate a second analysis result; - extract segments of the first response signal component at time instants defined by zero crossings of the first probe signal component, align in time the extracted segments to generate time-aligned segments, combine the time-aligned segments and calculate an average of the time-aligned segments to generate a third analysis result; - extract segments of the second response signal component at time instants defined by zero crossings of the second probe signal component, align in time the extracted segments to generate time-aligned segments, combine the time-aligned segments and calculate an average of the time-aligned segments to generate a fourth analysis result; and a representation calculation unit operable to combine the first, second, third and fourth analysis results to generate at least one representation of the characteristics of the system.

An embodiment of the present invention provides an improved method for determining a complex impulse response of a system under test excited by a waveform comprising a plurality of predetermined frequency components.

An embodiment of the present invention provides a method for obtaining a high-resolution complex impulse response from a signal, or a plurality of signals, registered at a specified receiver location, and produced in response to a suitable probe signal generated by a source placed at a predetermined position.

Brief Description of the Drawings

Embodiments of the present invention will now be described, by way of example only, with reference to the accompanying drawings, in which:

Fig. 1a is an overlay of segments of a signal processed in accordance with a crosslation method.

Fig. 1b depicts the crosslation function $C(\tau)$ representing the signal being processed.

Fig. 2 is a functional block diagram of a crosslator system.

Fig. 3 is a block diagram of a wideband reflectometer constructed in accordance with a first embodiment of the invention.

Fig. 4 is an example of an impulse response of a concert hall.

Fig. 5 illustrates a method for representing timings of zero upcrossings in two quadrature components by switching times of an auxiliary binary waveform.

Fig. 6 is a block diagram of a bandpass reflectometer constructed in accordance with a second embodiment of the invention.

Crosslation

The embodiments of the present invention make use of a technique known as *crosslation.* This technique has been disclosed for time-domain signal processing in a number of Patents; see, for example, US 7,120,555, US 6,539,320 and US 7,216,047, as well as co-pending European patent applications 09 154 247 and 09 154 245. The entire contents of these patents and patent applications are incorporated herein by cross-reference.

Before describing embodiments of the present invention, therefore, a brief summary of the crosslation technique is given below for reference purposes and to facilitate the understanding of its specific characteristics that are relevant to the embodiments.

In accordance with the crosslation technique, a signal s(t) of interest is examined to determine the time instants at which its level crosses zero, either with a positive slope (an upcrossing) or with a negative slope (a downcrossing). The time instants of these crossing events are used to obtain respective segments of the signal s(t), the segments having a predetermined duration. The segments corresponding to zero upcrossings are all summed, and the segments corresponding to zero downcrossings are all subtracted from the resulting sum. The combined segments are represented by an odd function, referred to as the crosslation function that contains compressed information regarding the statistical characteristics of the signal being analyzed.

To explain crosslation further, consider a continuous zero-mean signal s(t); there are time instants at which the signal crosses a zero level with a positive or negative slope. These time instants

$$t_1, t_2, \ldots, t_k, \ldots, t_K$$

will form a set of zero upcrossings and downcrossings. Suppose that any one of the zero crossings of s(t), say that at $t_k$, has been selected. Consider now the primary signal s(t) before and after its zero crossing, $s(t_k) = 0$, occurring at this selected time instant $t_k$.

For the purpose of this analysis, it is convenient to introduce the notion of signal *trajectory,* associated with a zero crossing of the signal. For a zero crossing occurring at $t_k$, the signal trajectory $s_k(\tau)$ is determined from

$$s_k(\tau) = s(t_k + \tau); \qquad k = 1, 2, \ldots K \qquad \ldots (1)$$

where $\tau$ is (positive or negative) *relative time.* Accordingly, each trajectory $s_k(\tau)$ is simply a time-shifted copy of the primary signal s(t). The time shift, different for each trajectory, results from the time transformation

$$\tau = t - t_k; \qquad k = 1, 2, \dots K, \qquad \dots (2)$$

used for transporting signal trajectories from the time domain (t) to the tau-domain ($\tau$).

Accordingly, a single primary signal s(t) can generate successively a plurality of trajectories $\{s(t_k + \tau); k = 1, 2, \dots K\}$ that are mapped (by the time shifts) into another set of trajectories $\{s_k(\tau); k = 1, 2, \dots K\}$, each being a function of relative time $\tau$ in the tau-domain. Such construction makes all zero crossings of a primary signal s(t) equivalent in the sense that they, being aligned in time, jointly define the same origin $\tau = 0$ of the relative time $\tau$.

The duration of each trajectory used for further signal processing is determined by a preselected *trajectory frame.* In addition, within this frame, a specific location is selected (e.g., somewhere close to the middle) to become the origin of the relative time $\tau$.

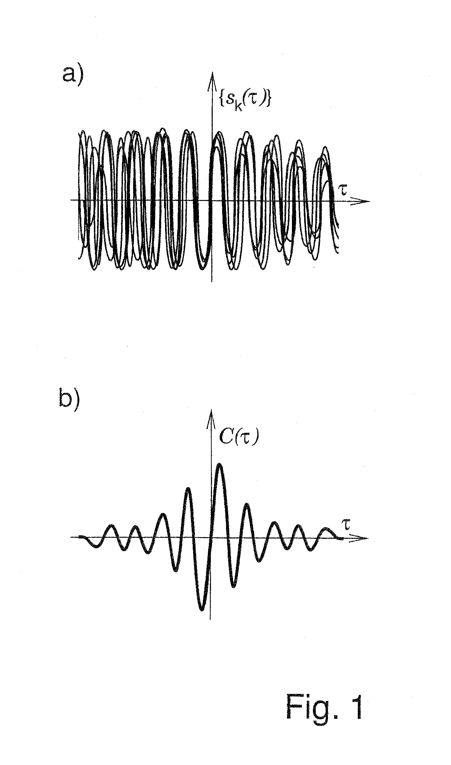

When the above time-shifting procedure has been replicated for each of the selected K zero crossings, the trajectory frame in the tau-domain will have contained K signal trajectories, and the positions of the corresponding zero crossings will have coincided with the relative time origin, $\tau = 0$. For illustrative purposes, Fig. 1a depicts an overlay of time-aligned signal trajectories associated with zero upcrossings.

K signal trajectories $\{s(t_k + \tau), k = 1, 2, \dots, K\}$, associated with zero crossings $\{s(t_k) = 0\}$ of a primary signal s(t), are used to determine a crosslation function $C(\tau)$, defined by

$$C(\tau) = \frac{1}{K}\sum_{k=1}^{K}(-1)^{\psi}s(t - t_k) = \frac{1}{K}\sum_{k=1}^{K}(-1)^{\psi}s_k(\tau) \qquad \dots (3)$$

where $\psi = 0$ for a zero upcrossing, and $\psi = 1$ for a zero downcrossing. Accordingly, each signal trajectory associated with a zero upcrossing is being added to the resulting sum, whereas a trajectory associated with a zero downcrossing is being subtracted from that sum.

The crosslation function $C(\tau)$ will always attain a zero value at $\tau = 0$; however, other zero values may be observed at other non-zero values of the relative time $\tau$. Fig. 1b is an example of a crosslation function obtained by averaging a number of signal trajectories suitably aligned in the tau-domain.

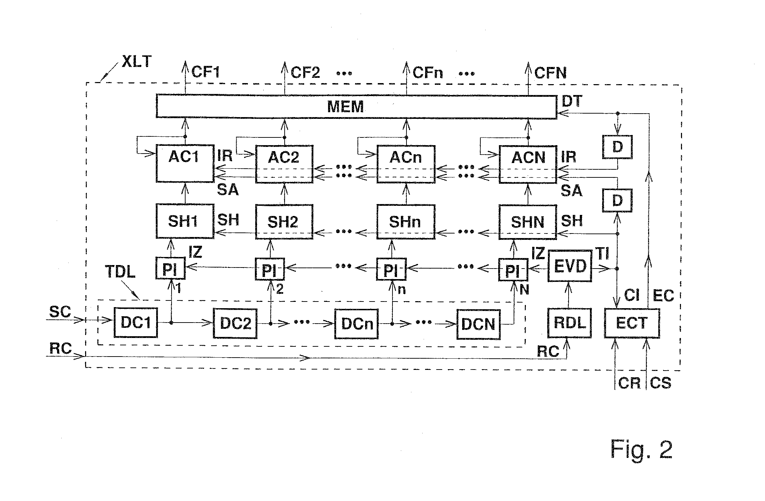

A functional block diagram of a crosslator system XLT is shown in Fig. 2. The system comprises a cascade of N delay cells, DC1, ..., DCn, ..., DCN, forming a tapped delay line TDL, an array of identical polarity-reversal circuits PI, a plurality of sample-and-hold circuits, SH1, ..., SHn, ..., SHN, a plurality of accumulators AC1, ..., ACn, ..., ACN, a memory MEM, a constant delay line RDL, an event detector EVD, an event counter ECT, and two auxiliary delay units D.

Each of N taps of the delay line TDL provides a time-delayed replica of the analyzed signal s(t) applied to input SC. At any time instant, the values observed at the N taps of the line TDL form jointly a representation of a finite segment of the input signal s(t) propagating along the line TDL. Preferably, the relative delay between consecutive taps of the TDL has a constant value.

The analyzed signal s(t) is also applied to input RC and delayed in the constant delay line RDL by a time amount equal approximately to a half of the total delay introduced by the tapped delay line TDL. The output of the delay line RDL drives the event detector EVD.

When the event detector EVD detects a zero crossing in the delayed signal s(t), a short trigger pulse TI is produced at output TI, and output IZ supplies a signal indicating the type (up or down) of a detected zero crossing.

Each circuit PI of the array of identical polarity-reversal circuits is driven by a respective tap of the delay line TDL and it supplies a signal to a corresponding sample-and-hold circuit. In response to a signal at control input IZ, each circuit PI either passes its input signal with a reversed polarity (when a zero downcrossing is detected), or passes its input signal in its original form (when a zero upcrossing is detected).

A short trigger pulse TI is generated by the event detector EVD to initiate, via the common input SH, a simultaneous operation of all sample-and-hold circuits, SH1, ..., SHn, ..., SHN. Each sample-and-hold circuit SHn captures the instantaneous value of the signal appearing at its input; this value is then acquired by a respective accumulator ACn at the time instant determined by a delayed trigger pulse TI applied to the common input SA. The trigger pulse TI also increments by one via input CI the current state of an event counter ECT.

The capacity of the event counter ECT is equal to a predetermined number of zero crossings to be detected in the input signal s(t). Accordingly, the time interval needed to detect the predetermined number of zero crossings will determine the duration of one complete cycle of operation of the crosslator system.

The capacity of the event counter ECT can be set to a required value by applying a suitable external control signal to input CS. Additionally, the state of the event counter ECT can be reset, via input CR, to an initial 'zero state'; this 'zero sate' will also reset to zero all the accumulators. The event counter ECT can as well be arranged to operate continually in a 'free-running' fashion.

A trigger pulse TI delayed in the delay unit D initiates, via common input SA, the simultaneous operation of all accumulators driven by respective sample-and-hold circuits. The function of each accumulator ACn is to perform addition of signal values appearing successively at its input during each full operation cycle of the crosslator system. As explained below, all the accumulators are reset to zero, via common input IR, before the start of each new cycle of operation.

When a predetermined number of zero crossings has been detected by the event detector EVD, and registered by the event counter ECT, an end-of-cycle pulse EC is produced at the output of the counter ECT. This pulse initiates, via input DT, the transfer of the accumulators' data to the memory MEM. As a result, a discrete-time version of the determined crosslation function $C(\tau)$ will appear at the N outputs, CF1, ..., CFn, ..., CFN of the memory MEM.

An end-of-cycle pulse EC, suitably delayed in the delay unit D, is used to reset to zero, via common input IR, all the accumulators. Also, when operating in a 'free-running' mode, the event counter ECT after reaching its maximum value (capacity) will revert to its initial 'zero state'. At this stage, the crosslator system XLT, having completed its full cycle of operation, is ready to start a new cycle. It should be pointed out that the operation of the crosslator XLT can be terminated and re-started at any time by applying a suitable control signal to input CR of the event counter ECT.

In its basic form, the crosslation function contains information associated with the relationship between time-shifted replicas of the same signal; therefore, it is indicative of signal de-coherence. However, in many applications, it is of interest to examine relationships between a pair of signals that may be dependent. In such a case, one of the two signals is applied to input SC, whereas input RC is driven by the other signal.

For future reference, a set of operations that produces two forms of crosslation will be denoted symbolically as follows:

- for crosslation using upcrossings and downcrossings,

$$\langle\, U(t)|V \,\rangle \;\; = \;\; \frac{1}{K}\sum_{k=1}^{K}(-1)^{\psi}U_{k}(\tau) \qquad\qquad \dots (4)$$

when the times of K zero crossings (upcrossings and downcrossings) occurring in signal V(t) at input RC are utilized to align and average K overlapping segments of signal U(t) applied to input SC, each such segment being associated with a respective zero crossing in V(t). In the above formula, $\psi = 0$ for a zero upcrossing, and $\psi = 1$ for a zero downcrossing;

- for crosslation using only upcrossings,

$$\langle\, U(t)|V^{+} \,\rangle \;\; = \;\; \frac{1}{K^{+}}\sum_{k=1}^{K^{+}}U_{k}(\tau) \qquad\qquad \dots (5)$$

when the times of $K^{+}$ zero upcrossings occurring in signal V(t) at input RC are utilized to align and average $K^{+}$ overlapping segments of signal U(t) applied to input SC, each such segment being associated with a respective zero upcrossing in V(t).

As will be explained in details below, for the purpose of impulse response determination, embodiments of the present invention provide a crosslation-based method capable of determining specific relationships between a suitably constructed probe (stimulating) signal and a signal obtained in response to this stimulus. This method can produce a representation of a complex impulse response with a sufficiently high precision to be employed, for example, for characterization and classification in many application areas, such as concert-hall acoustics.

Underlying Theory

Having described the crosslation technique to be used in embodiments of the present invention, the underlying theory will be presented below to facilitate the understanding of the operation of the embodiments.

A technique of time-domain crosslation is employed in the embodiments based on the following analysis. Assume that H(f), $0 < f < \infty$, is the frequency transfer (complex) function of a system under examination. Accordingly, an analytic (complex) impulse response $h_A(\tau)$ of the system can be determined from the Fourier integral

$$h_A(\tau) = 2 \int_0^\infty H(f) \exp(j2\pi f\tau)\, df \qquad \dots (6)$$

In a particular case, when $H(f) \equiv 1$ for all frequencies, $0 < f < \infty$, the real part $h_R(\tau)$ of the analytic impulse response $h_A(\tau)$ of the system is a delta impulse $\delta(\tau)$ given by

$$h_R(\tau) = \text{Re}[h_A(\tau)] = 2 \int_0^\infty \cos(2\pi f\tau)\, df = \delta(\tau) \qquad \dots (7)$$

The imaginary part $h_I(\tau)$ of the response $h_A(\tau)$ assumes the form

$$h_I(\tau) = \text{Im}[h_A(\tau)] = 2 \int_0^\infty \sin(2\pi f\tau)\, df = \tilde{\delta}(\tau) \qquad \dots (8)$$

where $\tilde{\delta}(\tau)$ is the Hilbert transform (or a *quadrature* version) of delta impulse.

Consequently, the analytic impulse response $h_A(\tau)$ of this system is an *analytic* delta function $\delta_A(\tau)$

$$\delta_A(\tau) = \delta(\tau) + j\, \hat{\delta}(\tau) \qquad \dots (9)$$

where $j^2 = -1$.

In a special case of an all-pass phase shifter, when $|H(f)| \equiv 1$ and $\theta(f) = -\theta_0$ for all frequencies, $0 < f < \infty$ ($\theta$ being the phase), the analytic impulse response $h_A(\tau)$ assumes the form of an analytic delta function $\delta_A(\tau)$ rotated by an angle $\theta_0$,

Another case of interest is an all-pass system, $|H(f)| \equiv 1$, with a linear phase characteristic $\theta(f) = -2\pi fd$ for all frequencies, $0 < f < \infty$. Such a system introduces a constant delay d, and its analytic impulse response $h_A(\tau)$ has the shape of an analytic delta function shifted in time, $\delta_A(\tau - d)$.

An analytic delta function rotated and shifted in time is an analytic impulse response $h_A(\tau)$ of an all-pass system, $|H(f)| \equiv 1$, with a phase characteristic $\theta(f) = -\theta_0 - 2\pi fd$. It is important to note that for a single-frequency (infinite) sinusoidal wave, phenomena of phase-shift and time-shift (delay) manifest themselves in the same manner.

In general, a frequency transfer function H(f) is a complex function characterized by its real part and imaginary part, $H_R(f)$ and $H_I(f)$, respectively. Accordingly, the real part $h_R(\tau)$ of the analytic impulse response $h_A(\tau)$ of a system can be determined from

$$h_R(\tau) \;=\; 2\int_0^\infty H_R(f)\cos(2\pi f\tau)\,df \;-\; 2\int_0^\infty H_I(f)\sin(2\pi f\tau)\,df \qquad \ldots (10)$$

As seen, the result $h_R(\tau)$ is obtained from a combination of two components:

1. accumulated responses of the real part $H_R(f)$ to a stimulation comprising a plurality of cosine waves having different frequencies;

2. accumulated responses of the imaginary part $H_I(f)$ to a stimulation comprising a plurality of sine waves having different frequencies.

In a similar manner, an imaginary part $h_I(\tau)$ of the analytic impulse response $h_A(\tau)$ of a system can be determined from

$$h_I(\tau) \;=\; 2\int_0^\infty H_R(f)\sin(2\pi f\tau)\,df \;+\; 2\int_0^\infty H_I(f)\cos(2\pi f\tau)\,df \qquad \ldots (11)$$

The above result $h_I(\tau)$ is obtained from a combination of another two components:

1. accumulated responses of the real part $H_R(f)$ to a stimulation comprising a plurality of sine waves having different frequencies;

2. accumulated responses of the imaginary part $H_I(f)$ to a stimulation comprising a plurality of cosine waves having different frequencies.

The real and imaginary parts, $h_R(\tau)$ and $h_I(\tau)$, of an analytic impulse response $h_A(\tau)$, either separately or suitably combined, can be utilized to characterize a linear system under examination.

For a class of minimum-phase systems, there exists a unique relationship between the two parts, $h_R(\tau)$ and $h_I(\tau)$, of an analytic impulse response $h_A(\tau)$; hence, utilizing both parts may seem unnecessary. However, in general, a practical system of interest may be viewed as a combination of a minimum-phase system followed by an all-pass system. In this context, an all-pass system is a linear system that changes only the phases of input frequency components, while preserving their original amplitudes.

From the above analysis it follows that the two parts of an analytic impulse response can be obtained by suitably accumulating system responses to a plurality of sine or cosine waves that are all *synchronized* in time. Since crosslation involves averaging of overlapping signal segments that are very precisely aligned in time, the present inventor has realised that crosslation can be exploited to determine experimentally real and imaginary parts of an analytic impulse response of a system of interest.

First Preferred Embodiment - Wideband Crosslation Reflectometer

In accordance with the first embodiment, a system under test is stimulated with a continuous signal s(t) comprising a plurality of frequency components. As will be explained below, the power spectral density of such signal should be suitably shaped between some predetermined lower, $F_1$, and upper, $F_2$, frequencies.

A sinusoidal probe signal with its frequency varying in a linear or non-linear fashion may seem a good choice. Although such signals are used in practice, their applicability in multiuser environments is rather limited because of mutual interference. (In this context, a "multiuser environment" means a situation in which a plurality of test signals is used at the same time to examine a system of interest.) Therefore, in this embodiment, a noise signal is employed to excite (probe) a system under test. However, a sinusoidal signal with suitable non-deterministic phase (or frequency) modulation would also be a good choice.

The embodiment exploits an observation that, in simplistic terms, a small portion of a noise signal in the neighbourhood of each of its zero crossings can be viewed locally as a sinusoidal 'wavelet'. Each such sinusoidal 'wavelet' at zero crossing of a noise signal produces a substantially coincident in time cosinusoidal 'wavelet' in a quadrature version of this signal. It is assumed that a quadrature version of a primary signal is obtained by shifting the phases of all its frequency components by $\pi/2$. Obviously, also a sinusoidal 'wavelet' occurring at each zero crossing of the quadrature noise signal produces a substantially coincident cosinusoidal 'wavelet' in the primary noise signal.

The mean value of the total number $K_{IQ}$ of zero crossings observed jointly in Gaussian noise and its quadrature version during a time interval T is given by Rice's formula, $K_{IQ} = 4B_sT$, where $B_s$ is the root-mean-square (rms) bandwidth of the signal. In the case of low-pass noise, i.e., $F_1 = 0$, $K_{IQ} = 4TF_2/\sqrt{3}$; hence, the total number of zero crossings is greater than the number, $2 F_2 T$, of independent samples that can fully characterize the respective noise segment.

More specifically, the total number of zero crossings occurring jointly in both a noise signal and its quadrature version exceeds by about 15% the number of sampling points required for signal reconstruction. Therefore, in principle, there is no upper limit on the frequency ratio $F_2/F_1$; hence, wideband low-pass noise rather than band-pass noise may be used, if required, to excite a system under test. Because the number of all (random) zero crossings is sufficiently large, a plurality of 'wavelets' associated with those crossings, will substantially cover, in the long run, the entire frequency range $(F_1, F_2)$.

In the present embodiment, a probe signal comprising a stimulating noise signal s(t) is split into two orthogonal components: an in-phase probe signal component SI(t) and a quadrature probe signal component SQ(t). Additionally, a response signal r(t) produced by the system under test is also split into two orthogonal response signal components, RI(t) and RQ(t).

The real part $h_R(\tau)$ of an analytic impulse response $h_A(\tau)$ of the system under test is represented by a real part of a mutual wideband crosslation $\boldsymbol{C}_{RS}(\tau)$ determined from

$$\mathrm{Re}[\boldsymbol{C}_{RS}(\tau)] \;=\; \langle RI(t)|SQ \rangle - \langle RQ(t)|SI \rangle \qquad \ldots (12)$$

As seen, a real part of $\boldsymbol{C}_{RS}(\tau)$ is the difference of two *discordant* crosslation functions. A first discordant crosslation function uses zero crossings of an input probe signal component SQ(t) to align and average corresponding overlapping segments of a response signal component RI(t). Similarly, a second discordant crosslation function uses zero crossings of an input probe signal component SI(t) to align and average corresponding overlapping segments of a response signal component RQ(t).

Similarly, the imaginary part $h_I(\tau)$ of an analytic impulse response $h_A(\tau)$ of the system under test is represented by an imaginary part of a mutual wideband crosslation $\boldsymbol{C}_{RS}(\tau)$,

$$\mathrm{Im}[\boldsymbol{C}_{RS}(\tau)] \;=\; \langle RI(t)|SI \rangle + \langle RQ(t)|SQ \rangle \qquad \ldots (13)$$

being the sum of two *concordant* crosslation functions. A first concordant crosslation function uses zero crossings of an input probe signal component SI(t) to align and average corresponding overlapping segments of a response signal component RI(t). In a similar manner, a second concordant crosslation function uses zero crossings of an input probe signal component SQ(t) to align and average corresponding overlapping segments of a response signal component RQ(t).

In accordance with a further aspect of the embodiment, the real and imaginary parts of a mutual wideband crosslation $\boldsymbol{C}_{RS}(\tau)$ are used to determine measures of the power and phase of the response signal.

More particularly, in the present embodiment, a power spread $P(\tau)$ is calculated, for example in accordance with

$$P(\tau) \;=\; \{\mathrm{Re}[\boldsymbol{C}_{RS}(\tau)]\}^2 + \{\mathrm{Im}[\boldsymbol{C}_{RS}(\tau)]\}^2 \qquad \ldots (14)$$

For example, when a probe signal propagates along different paths, the above power spread $P(\tau)$ will exhibit a number of peaks equal to the number of propagation paths. The location of each such peak will correspond to a respective propagation delay, and the height of each peak will be indicative of the respective path attenuation.

Furthermore, to obtain phase information, in this embodiment, the real and imaginary parts of a mutual wideband crosslation $\boldsymbol{C}_{RS}(\tau)$ are used to determine a phase distribution $\Phi(\tau)$ defined by

$$\Phi(\tau) = \tan^{-1}\left\{\frac{\mathrm{Im}[\boldsymbol{C}_{RS}(\tau)]}{\mathrm{Re}[\boldsymbol{C}_{RS}(\tau)]}\right\}; \quad -\pi < \Phi(\tau) < \pi \qquad \ldots (15)$$

where the inverse tangent $\tan^{-1}(\ )$ is a four-quadrant operation. For example, when a probe signal is reflected by different parts of a system under test, the phase of each such reflection will be indicative of the properties of the corresponding part.

The power spread $P(\tau)$ and the phase distribution $\Phi(\tau)$ provide, alone or jointly, useful information about the structure of a system being tested. As will be appreciated, the way in which $P(\tau)$ and $\Phi(\tau)$ are used will be dependent upon the specific application. In particular, dependent upon the application, $P(\tau)$ may be used above, $\Phi(\tau)$ may be used alone, or a combination of $P(\tau)$ and $\Phi(\tau)$ may be used. In latter case, for example, $P(\tau)$ and $\Phi(\tau)$ may be utilized to construct a complex reflectogram for the purpose of system detection, recognition and classification.

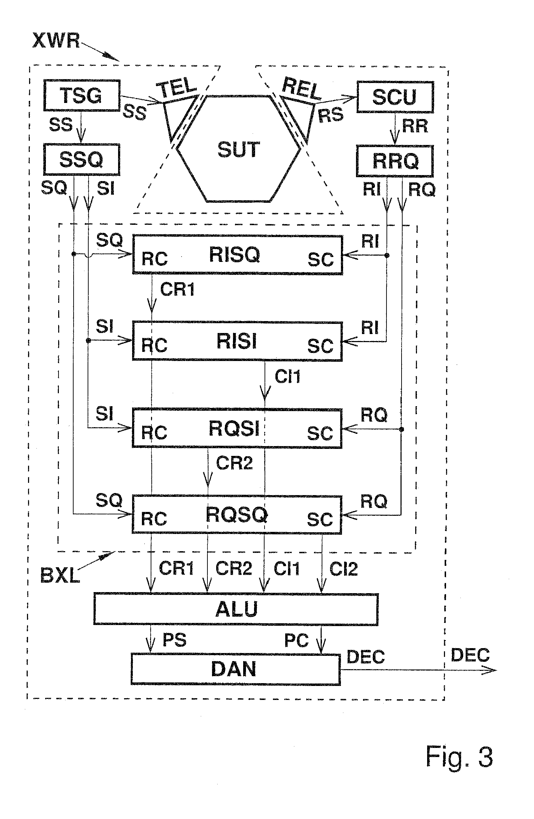

Fig. 3 is a block diagram of a wideband crosslation-based reflectometer XWR constructed in accordance with the present embodiment. The reflectometer comprises the following functional blocks:

- a transmit element TEL;
- a receiving element REL;
- a probe signal generator TSG;
- a signal conditioning unit SCU
- two signal splitters which, in this embodiment, comprise quadrature splitters, SSQ and RRQ;
- a crosslation calculator which, in this embodiment, comprises a bank BXL of four crosslators: RISQ, RISI, RQSI and RQSQ;
- a calculation unit, which, in this embodiment, comprises an arithmetic logic unit ALU;
- a data analyzer DAN.

A system under test SUT is excited by a probe signal SS via a suitable transmit element TEL, such as a loudspeaker, ultrasonic transducer, microwave antenna, light source, etc. As a result of interaction between the probe signal SS and the system SUT, a response signal RS is received in a receive element REL, such as a microphone, ultrasonic sensor, microwave antenna, photodetector, etc.

A suitable probe signal SS as described above is generated by a probe signal generator TSG and applied to the transmit element TEL. For further processing, the probe signal SS is split in a quadrature splitter SSQ into two orthogonal probe signal components, SI and SQ. That is, the quadrature splitter SSQ shifts all of the frequency components in the signal SS by 90° to generate SQ.

A signal RS received in the receive element REL is converted to a suitable form RR in a signal conditioning unit SCU, and then split in a quadrature splitter RRQ into two orthogonal response signal components, RI and RQ.

A bank BXL of crosslators comprises four identical crosslators, RISQ, RISI, RQSI and RQSQ, each arranged to operate in a basic configuration of Fig. 2.

The crosslator RISQ produces a first crosslation function CR1, where

$$\mathrm{CR1} = \langle\,\mathrm{RI}(t)\|\mathrm{SQ}\,\rangle \qquad \ldots (16)$$

Accordingly, the quadrature component RI of the received signal RR is applied to a "signal" input SC of the crosslator RISQ, whereas the 'reference' input RC of the crosslator is driven by the quadrature component SQ of the signal SS.

In a similar fashion, the crosslator RQSI produces a second crosslation function CR2, where

$$\mathrm{CR2} = \langle\,\mathrm{RQ}(t)\|\mathrm{SI}\,\rangle \qquad \ldots (17)$$

Accordingly, the quadrature component RQ of the received signal RR is applied to a "signal" input SC of the crosslator RQSI, whereas the 'reference' input RC of the crosslator is driven by the quadrature component SI of the signal SS.

The two crosslation functions, CR1 and CR2, are utilized in the arithmetic logic unit ALU to determine a representation, (CR1 - CR2) in accordance with equation (12) above, of the real part of an analytic impulse response $h_A(\tau)$ of the system under test SUT.

The arithmetic logic unit ALU also determines a representation, (CI1 + CI2) in accordance with equation (13) above, of the imaginary part of the analytic impulse response $h_A(\tau)$ of the system under test SUT. The two crosslation functions, CI1 and CI2, are produced by crosslators RISI and RQSQ as follows.

The crosslator RISI receives at its "signal" input SC the quadrature component RI, and, at its "reference" input RC, the component SI to produce a third crosslation function

$$\text{CI1} \;=\; \langle\, \text{RI}(t) | \text{SI} \,\rangle \qquad\qquad \dots (18)$$

A fourth crosslation function

$$\text{CI2} \;=\; \langle\, \text{RQ}(t) | \text{SQ} \,\rangle \qquad\qquad \dots (19)$$

is produced by the crosslator RQSQ that receives at its "signal" input SC the quadrature component RQ, and at its 'reference' input RC the component SQ.

The arithmetic logic unit ALU also initiates and controls (via inputs CR and CS, Fig. 2) the operation of a respective event counter ECT in each of the four crosslators, RISQ, RQSQ, RISI and RQSI.

The representations (CR1-CR2) and (CI1+CI2) represent characteristics of the system under test. In this embodiment, these initial representations are processed to generate a first representation of the power and delay of the probe signal SS, and a second representation of the effect of the system under test on the phase of the probe signal. More particularly, the arithmetic logic unit ALU utilizes the calculated representations, (CR1-CR2) and (CI1+CI2), of the two parts of the analytic impulse response $h_A(\tau)$ to determine the power spread PS

$$PS = (CR1 - CR2)^2 + (CI1 + CI2)^2 \qquad\qquad \dots (20)$$

and the phase characteristic PC

$$PC \;=\; \tan^{-1}\left(\frac{CI1 + CI2}{CR1 - CR2}\right); \qquad -\pi \;<\; PC \;<\; \pi \qquad\qquad \dots (21)$$

where the inverse tangent $\tan^{-1}(\ )$ is a four-quadrant operation.

The calculated power spread PS and the calculated phase characteristic PC are applied to a suitable data analyzer DAN for further processing. Depending on the particular application, the data analyzer DAN utilizes one or both of the functions PS and PC to make and output a decision DEC regarding the system under test SUT.

For example, for applications in which the system under test is to be classified, data analyzer DAN may compare PS and/or PC against reference data. Depending upon the application, the reference data may be pre-stored or calculated in real-time, and the reference data may represent one or more thresholds, previously calculated functions PS and PC, or any other suitable referene data. For example, the functions PS and PC may be compared to 'templates' stored in the analyzer DAN to decide whether or not an examined system has been modified. The functions PS and PC may also be used by the analyzer DAN to decide whether or not an interrogated object belongs to some class of objects of interest.

For illustration purposes, examples of different application areas will now be given. It will be appreciated, however, that these examples are non-limiting, as there are many other application areas.

*Example 1*

For fluid-level measurement, a low-energy wideband electromagnetic probe signal is propagated along a thin wave guide, e.g., a metal rod or a steel cable. When this signal reaches the surface of the medium to be monitored, part of the signal power is reflected back and the reflectometer determines the fluid level from the time difference between the signal sent and the signal reflected. In this example the power spread PS could be utilised alone.

*Example 2*

A reflectometer as described herein is also a very useful tool in the failure analysis of highspeed printed circuit boards. The signal traces on these boards are carefully crafted to emulate a transmission line. By observing reflections, any unsoldered pins of a ball grid array device can be detected. Additionally, short circuited pins can also be detected in a similar fashion.
The time domain reflectometry technique described herein can therefore be utilized in semiconductor failure analysis as a non-destructive method for the location of defects in semiconductor device packages. The TDR provides an electrical signature of individual conductive traces in the device package, and is useful for determining the location of opens and shorts. In this example, the phase characteristic PC could be utilised alone.

*Example 3*

A reflectometer as described herein can be used to determine moisture content in soil and porous media. The method is a transmission-line technique, and determines an apparent permittivity (dielectric constant) from the travel time of an electromagnetic wave that propagates along a transmission line, usually two or more parallel metal rods embedded in a soil or sediment. The key feature is the ability to accurately determine the permittivity of a material from wave propagation, and the fact that there is a strong relationship between the permittivity of a material and its water content. In this example, PS could be utilised alone.

*Example 4*

Time domain reflectometry as described herein can be utilized to monitor slope movement in a variety of geotechnical settings including highway cuts, rail beds, and open pit mines. In stability monitoring applications, a coaxial cable is installed in a vertical borehole passing through the region of interest. The electrical impedance at any point along a coaxial cable changes with deformation of the insulator between the conductors. A brittle grout surrounds the cable to translate earth movement into an abrupt cable deformation that shows up as a detectable response in the reflectance trace. In this example both PS and PC could be utilized. For a comprehensive review of such applications see, for example, K. M. O'Connor and C. H. Dowding: GeoMeasurements by Pulsing TDR Cables and Probes. CRC Press, Boca Raton, 1999.

*Example 5*

PS and PC together provide a powerful means of analysing electrical or optical transmission media such as coaxial cables and optical fibres. One particular application is the evaluation of transmission lines and radio channels for communications. Real-time methods for channel evaluation are discussed, for example, in: J. M. Goodman: HF Communications - Science and Technology. Van Nostrand Reinhold, New York, 1992.
However, other applications are also possible. For example, US 6,859,041 discloses a method to detect and locate faults in aircraft cables. WO 03/096503 describes a method for detecting an unauthorized tap on a power line to prevent power theft.

*Example 6*

The technique described herein can be used for non-destructive ultrasonic testing of materials for flaw detection and localization, for example in rail flaw inspection. In this example, both PS and PC could be utilized. A good review of some other applications in: X. E. Gros: NDT Data Fusion. Arnold, London, 1997.

Second Preferred Embodiment - Bandpass Crosslation Reflectometer

A second embodiment of the present invention will now be described.

As noted above, the present invention can be utilised in many different application areas. A system configured for one of these application areas, namely analysis of concert-hall acoustics, will now be described by way of a non-limiting example as a second embodiment.

The ISO standard (*ISO 3382: 1997, Acoustics - Measurement of the reverberation time of rooms with reference to other acoustic parameters*) describes methods recommended for determining a number of well-accepted room acoustic parameters. However, some other parameters, such as *texture,* that can characterize acoustic quality of a concert hall remain difficult to quantify and measure in an objective way.

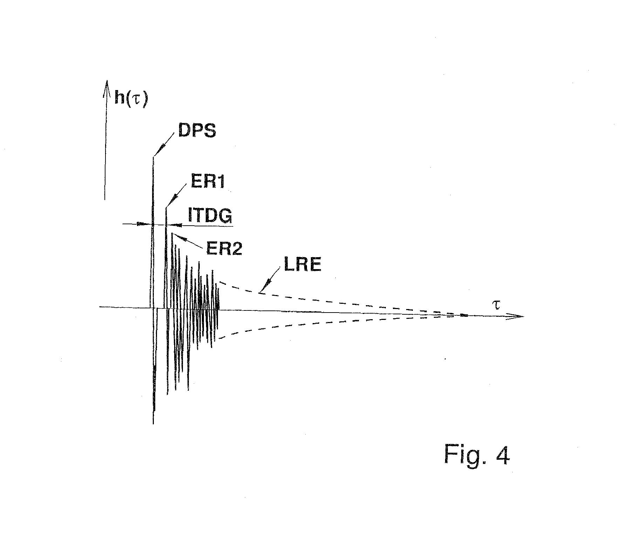

Fig. 4 depicts an example of an impulse response h(τ) (also referred to as *a reflectogram*) of a concert hall. Such a response may represent, for example, a record of sound pressure registered at a microphone in the audience when a short impulsive sound, such as a gunshot, is produced on the stage. The first peak, DPS, corresponds to direct-path sound propagation, whereas subsequent peaks, ER1, ER2, ..., represent a plurality of *early reflections* from the walls, ceiling, floor, etc. These early reflections are followed by other low-level multiple reflections that extend in time to form a *late reverberation* envelope LRE.

An important acoustic quality parameter is the initial-time-delay gap (ITDG) defined as the delay between the direct-path sound DPS and the first reflection ER1. The ITDG is used to characterize the 'intimacy' of a hall for music. All halls of high acoustic quality have ITDG values in the region of 20 ms or less; for example, for Boston Symphony Hall, ITDG ≈15 ms.

Another parameter that characterizes acoustic quality of a concert hall is *texture.* In L. L. Beranek, Concert Halls and Opera Houses: Music, Acoustics, and Architecture. (Springer, New York, 2004*),* texture is defined as: "... the subjective impression the listeners derive from the patterns in which the sequence of early sound reflections arrives at their ears. In an excellent hall, those reflections that arrive soon after the direct sound follow in a more-or-less uniform sequence. In other halls, there may be a considerable interval between the first and the following reflections. Good texture requires a large number of early reflections, uniformly but not precisely spaced apart, and with no single reflection dominating the others."

One approach to characterize texture of a concert hall was described in T. Hidaka and L. L. Beranek, Objective and subjective evaluation of twenty-three opera houses in Europe, Japan and the Americas. J. Acoust. Soc. Am., 107, Jan. 2000, pp. 368-383. In this case, empirical reflectograms were used to examine the number and distribution of significant reflections that occur in the first 80-ms interval after the arrival of the direct-path sound. While the visual inspection of the reflectograms was helpful in separating the best concert houses from those of lesser quality, no quantitative measure could be devised.

From the above discussion, it follows that some important parameters characterizing the acoustic quality of a concert hall can be extracted from a suitably determined impulse response of the hall. However, as well known to those skilled in the art, a complete description of a plurality of signal reflections can only be obtained from both the magnitudes and phases of individual reflections.

Therefore, in general, an empirical reflectogram that depicts only one observable, such as response magnitude, versus delay cannot provide alone sufficient information to characterize a concert hall. Consequently, a complex empirical reflectogram will be needed to wholly describe a plurality of observed signal reflections. (It should be noted that, although described in the context of concert halls, this conclusion also applies to many other cases, in which an electromagnetic signal (which may be a light signal) or an ultrasonic signal is used to interrogate an object of interest for the purpose of its recognition or classification. In such applications, a complex empirical reflectogram can be viewed as a 'fingerprint' of a physical system being examined.)

The second embodiment generates such a complex reflectogram to characterise a concert hall.

Furthermore, as will be described below, the second embodiment incorporates a particularly advantageous technique for transmitting information defining the timings of the zero crossings of the signals SI and SQ for use in the crosslators, and a particularly advantageous implementation of the crosslators themselves.

In many applications, it is of interest to examine a plurality of a system's responses, each resulting from a stimulating signal occupying a different frequency band. For example, in acoustic measurements, a system's responses are examined in a number of octave bands, e.g., those centred at 125 Hz, 250 Hz, 500 Hz, 1 kHz, 2 kHz and 4 kHz. The use of bandpass excitation will lead to a significant simplification of a crosslation-based reflectometer.

In US Patent 7,515,089, 7 Apr. 2009, it is shown that any of the two orthogonal noise components will comprise a sufficient number of zero crossings for crosslation, if the ratio of the upper frequency $F_2$ and the lower frequency $F_1$ is less than or equal to three. (When $F_2/F_1 = 2$, the resulting stimulus is a one-octave test signal; the ratio $F_2/F_1 = 3$ defines a one-and-a-half-octave test signal.) Therefore, when both orthogonal components of stimulating noise are available for processing, a crosslation-based reflectometer may use only zero upcrossings observed jointly or collectively in those two components (or, alternatively, only zero downcrossings observed in these two components).

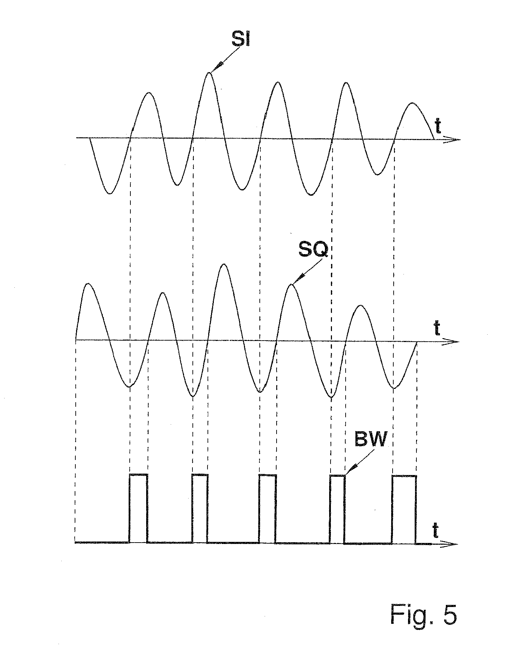

Fig. 5 illustrates a method used in the second embodiment for representing the timings of zero upcrossings observed in the two quadrature probe signal components, SI and SQ, of the probe signal SS by switching times of an auxiliary binary waveform BW. A suitable quadrature-to-binary converter QBC may be a simple R-S flip-flop being set to 'one' by a zero upcrossing in component SI and reset to 'zero' by a subsequent zero upcrossing in component SQ. Consequently, a zero upcrossing in component SI will be represented by a rising edge in binary waveform BW, whereas a falling edge in waveform BW will correspond to a zero upcrossing in component SQ.

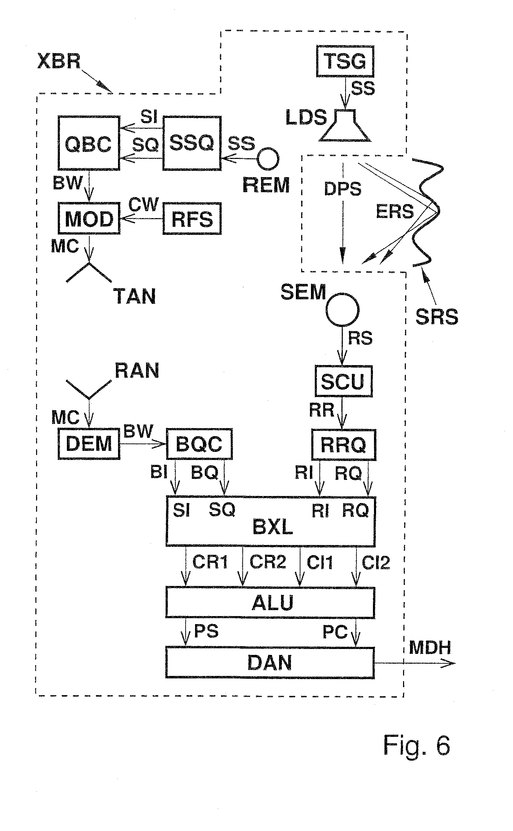

Fig. 6 is a block diagram of a bandpass crosslation-based reflectometer XBR constructed in accordance with the second embodiment. The reflectometer is depicted in a configuration suitable for determining an improved reflectogram characterizing sound reflections in a hall under test.

The reflectometer comprises the following functional blocks:

- a test loudspeaker LDS;
- a probe signal generator TSG;
- a reference microphone REM
- two signal splitters which, in this embodiment, comprise quadrature splitters, SSQ and RRQ;
- a quadrature-to-binary converter QBC;
- an RF source RFS;
- a modulator MOD;
- a transmit radio antenna TAN;
- a receive radio antenna RAN;
- a demodulator DEM;
- a timing signal generator which, in this embodiment, comprises a binary-to-quadrature converter BQC;
- a sensing microphone SEM;
- a signal conditioning unit SCU;
- a crosslation calculator which, in this embodiment, comprises a bank BXL of four crosslators: RISQ, RQSQ, RISI and RQSI;
- a calculation unit, which, in this embodiment, comprises an arithmetic logic unit ALU;
- a data analyzer DAN.

The reflectometer XBR operates as follows. A probe signal generator TSG produces a probe noise signal SS having a suitable frequency characteristic, such as one-octave frequency span. A loudspeaker LDS, situated at some predetermined position on the stage of the concert hall, is driven by signal SS to insonify the hall under test with a bandpass sound. It should be noted that the test signal generator TSG and loudspeaker LDS need not be electronic equipment and could therefore be replaced with any suitable sound source such as a gun, orchestra, etc.

A reference microphone REM intercepts a portion of the transmitted sound and converts it into a signal SS, being a representation of the probe signal produced by the generator TSG. Two quadrature probe signal components, SI and SQ, of the signal SS, supplied by a quadrature splitter SSQ, are used in a quadrature-to-binary converter QBC to produce a binary waveform BW corresponding to that in Fig. 5, containing information about zero-upcrossing timings in components SI and SQ. Thus, the quadrature-to-binary converter QBC acts as a timing signal generator.

A modulator MOD uses the binary waveform BW to modulate a carrier CW, supplied by an RF source RFS. A transmit antenna TAN, driven by the modulated RF signal, sends the modulated RF signal MC to a distant receive antenna RAN.

The modulated RF signal MC, received at antenna RAN, is demodulated in a demodulator DEM to produce a replica of the binary waveform BW. A binary-to-quadrature converter BQC produces at its two outputs, BI and BQ, respectively, a copy of the binary waveform BW and its polarity-inverted copy. Accordingly, rising edges of the waveform appearing at output BI will coincide with the zero upcrossings of the probe signal component SI; similarly, rising edges of the waveform at output BQ will coincide with the zero upcrossings of the probe signal component SQ.

A sensing microphone SEM, situated at some predetermined position in the hall (such as a seat position to be occupied by a member of an audience), receives a plurality of delayed and attenuated copies of the sound signal produced by the loudspeaker LDS. In Fig. 6, this multipath phenomenon is depicted symbolically: in addition to a direct-path sound DPS, there are also early sound reflections ERS.

An electric signal RS, supplied by the microphone SEM, is suitably preprocessed in a signal conditioning unit SCU. Its output signal RR in split in a quadrature splitter RRQ into two orthogonal response signal components RI and RQ.

The wireless link between transmitter TAN and receiver RAN, employed by this embodiment, can be replaced, if required, by a wired connection. However, a wireless link is preferred when the use of cables is inconvenient, especially in the case of multiple sensing microphones.

The two orthogonal components, RI and RQ, along with the binary waveforms, BI and BQ, are applied to a bank BXL of four crosslators operating in the same configuration as that shown in Fig. 3 of the first embodiment. However, in the present embodiment, each of the crosslators employs only zero upcrossings; therefore, its structure may be significantly simplified. More specifically, polarity-reversal circuits PI, used in the crosslator XLT of Fig. 2, are no longer needed; also, an event detector EVD becomes a simple rising edge detector with a single output TI.

If the embodiment is to be used to examine the distribution of significant reflections that occur after the arrival of the direct-path sound DPS, the delay of the delay line RDL in the crosslator XLT will be equal to the direct-path delay. Furthermore, when significant reflections may occur in an 80-ms interval and if a delay resolution of 0.1 ms is considered to be adequate, the number N of the crosslator cells will be equal to 800.

An arithmetic logic unit ALU determines the power spread PS from the four crosslation functions, supplied by the bank BXL of crosslators, as follows

$$PS = (CR1 - CR2)^2 + (CI1 + CI2)^2 \qquad \dots (22)$$

where the respective crosslation functions are of the form

$$CR1 \;=\; \langle\, RI(t)|SQ^+ \,\rangle, \quad CR2 \;=\; \langle\, RQ(t)|SI^+ \,\rangle \qquad \dots (23)$$

$$CI1 \;=\; \langle\, RI(t)|SI^+ \,\rangle, \qquad CI2 \;=\; \langle\, RQ(t)|SQ^+ \,\rangle \qquad \dots (24)$$

The power spread PS defines the distribution along a time-delay axis of the reflected power, which is a positive quantity (by definition). Therefore, the power spread PS can be regarded as an improved form of an empirical reflectogram. It can then be used to examine the number and distribution of significant reflections that occur in a specified time interval after the arrival of the direct-path sound.

For example, significant reflections can be determined by detecting those peaks in the power spread PS that exceed some predetermined threshold. Then, the distribution of the significant-reflection delays can be examined with the help of a mutual-delay histogram MDH, constructed as follows.

Assume that there are L significant reflections with the corresponding delays

$$t_1, t_2, \dots, t_l, \dots, t_L$$

and determine all mutual delays $|t_i - t_j|$, i, j = 1, 2, ... , L, i > j. The number of such defined mutual delays is equal to L(L-1)/2; for example, 20 significant reflections will give rise to 190 mutual delays. The calculated mutual delays are used to construct a histogram that will contain information regarding the distribution of the reflections in time.

In a case of substantially uniform reflections, excluding reflections with equal spacing, the mutual-delay histogram MDH will be relatively flat with no significant gaps, because all mutual delays will be mostly distinct. However, in the case of equally-spaced reflections, the histogram MDH will exhibit a characteristic down-slope, changing linearly from a high level, at smaller mutual-delay values, to a low level, at larger values of mutual delay. Therefore, a mutual-delay histogram can detect a special case of "uniform, yet maximally aperiodic" distribution of delays.

The above properties of mutual-delay histogram may be exploited to devise a suitable quantitative measure capable of characterizing sound texture in concert halls. One such simple measure will be a mean absolute deviation MAD of the histogram values from their mean or median value. A calculated value of MAD can be supplied by a data analyzer DAN at its output MDH.

Additionally, the phase characteristic PC

$$PC \;=\; \tan^{-1}\!\left(\frac{CI1 + CI2}{CR1 - CR2}\right) \qquad \dots (25)$$

can be exploited to examine the distribution of phases associated with significant reflections. Also in this case, a number of numerical parameters can be devised to characterize such distribution.

For example, phases associated with significant reflections may be represented by points on a unit-radius circle. A departure of the phase distribution from uniformity may be measured, for example, with the use of a mean resultant length, commonly exploited in statistics of circular data. This, or other, measure of uniformity can be supplied by the data analyzer DAN at its output MDH.

Modifications and Variations

Many modifications and variations can be made to the embodiments described above.

For example, in the embodiments described above, the probe signal components SI and SQ are quadrature signals, in which corresponding frequency components in each signal differ in phase by 90˚. Similarly, the response signal components RI and RQ are quadrature signals in which corresponding frequency components in each signal differ in phase by 90˚. However, a phase difference of 90˚ between SI and SQ, and between RI and RQ is not essential for operation of the embodiments. Instead, any phase difference θ between the frequency components of the signals, where θ MOD 180˚ < > 0, (where θ MOD 180˚ is the remainder when θ is divided by 180˚ and the symbol < > means not equal to) will work, although the phase difference between the frequency components of RI and RQ needs to be the same as the phase difference between the frequency components of SI and SQ. Similarly, the frequency components in SQ may be shifted by respective different amounts relative to the same frequency components in SI (so that the phase shift is not uniform between the frequency components), and the frequency components in RQ may be shifted by respective different amounts relative to the same frequency components in RI. Again, however, the phase shift between SI and SQ for a given frequency component must be the same as the phase shift between RI and RQ for the same frequency component. Accordingly, the term "phase-shifted" as used herein covers all of these different options. It is pointed out, however, that the best results will be achieved using quadrature signals.

In the embodiments described above, the crosslation calculator comprises a bank BXL of four crosslators, namely one crosslator for each crosslation calculation to be performed. This configuration enables the crosslation calculator to perform the four crosslation calculations concurrently. However, instead, the crosslation calculator may comprise one or two crosslators, each arranged to perform more than one crosslation by changing the inputs thereto, so that the crosslation calculations are performed sequentially. In this case, the crosslation calculations can be performed in any order and the results stored to permit PS and PC to be calculated when all of the results are available.

In the embodiments described above, PS and PC are calculated in accordance with equations (20) and (21). However, other equations can be used as approximations instead, depending upon the application. For example PS can be calculated as any additive combination of (CR1 - CR2) and (CI1 + CI2), such as:

$$PS' = |CR1 - CR2| + |CI1 + CI2| \qquad \dots (26)$$

Similarly, PC can be calculated as any ratio of (CI1 + CI2) and (CR1 - CR2) together with a function to limit the results to lie within a defined range ($\tan^{-1}$ being such a function in the embodiments described above), such as an inverse hyperbolic tangent function or a logarithmic function.

In the second embodiment described above, the components REM, SSQ, QBC, RFS, MOD and TAN are separate from the test signal generator TSG and loud speaker LDS. However, instead, the microphone REM may be omitted and the quadrature splitter SSQ may be connected directly to the test signal generator TSG to receive the probe signal SS.

In the second embodiment, the binary signal BW is generated using the timings of only the zero up crossings of signals SI and SQ. However, instead, the binary signal BW could be generated using the timings of only the zero downcrossings of signals SI and SQ.

In the second embodiment, the binary signal BW takes values of 0 and 1. However, the binary signal BW may be any two-level signal and could, therefore, take values of +1 and -1.

In the second embodiment, the binary signal BW is generated by determining the times of the zero upcrossings in SI and SQ and using these times to generate the rising and falling edges of the binary waveform BW. However, the times of the zero uprcossings in SQ correspond to the times of the positive peaks in signal SI (because SI and SQ are quadrature signals). Therefore, the times of the zero upcrossings (or downcrossings) in SQ can be determined from the signal SI alone. Similarly, even if the signals SI and SQ are not quadrature signals, the timres of the zero upcrossings (or downcrossings) in SQ can be determined from signal SI alone knowing its phase relationship to the signal SQ.

In most cases, conventional systems employ very short pulses to attain high time (range) accuracy and resolution. For this purpose, the embodiments described above use a wideband probe signal. However, instead, the embodiments could employ a number of probe signals (concurrently or sequentially), each occupying a different and relatively narrower frequency sub-band. Therefore, the resulting wide bandwidth would be obtained by combining individual sub-bands. (In a conventional system it is not possible to combine a number of longer pulses to obtain a short pulse.)

In the embodiments described above, the probe signal SS that is used to stimulate the system under test comprises one of the probe signal components, namely SI. However, instead, the probe signal SS that is used to stimulate the system under test may have a different phase from both the probe signal components SI and SQ.

It will be appreciated that many other modifications and variations can be made.

It will therefore be understood that the foregoing description of preferred embodiments of the invention has been presented for the purpose of illustration and description. It is not intended to be exhaustive or to limit the invention to the precise form disclosed. In light of the foregoing description, it is evident that many alterations, modifications, and variations will enable those skilled in the art to utilize the invention in various embodiments suited to the particular use contemplated.

**Claims**

1. Apparatus for determining characteristics of a system, the apparatus comprising:

   a probe signal splitter operable to receive a probe signal for probing a system under test, and to split the probe signal into first and second probe signal components such that the second probe signal component is a phase-shifted version of the first probe signal component with a phase difference $\theta$ satisfying $\theta$ MOD 180˚ < > 0˚;
   a response signal splitter operable to receive a response signal from the system under test comprising a response of the system to the probe signal, and to split the response signal into first and second response signal components such that the second response signal component is a phase-shifted version of the first response signal component with a phase difference corresponding to the phase difference of the first and second probe signal components;
   a crosslation calculator operable to perform:

   - a first crosslation calculation using the first response signal component and zero crossings of the second probe signal component to generate a first crosslation result;
   - a second crosslation calculation using the second response signal component and zero crossings of the first probe signal component to generate a second crosslation result;
   - a third crosslation calculation using the first response signal component and zero crossings of the first probe signal component to generate a third crosslation result; and
   - a fourth crosslation calculation using the second response signal component and zero crossings of the second probe signal component to generate a fourth crosslation result; and

   a calculation unit operable to combine the first, second, third and fourth crosslation results to generate at least one representation of the characteristics of the system.

2. Apparatus according to Claim 1, wherein the crosslation calculator is arranged to perform each crosslation calculation by:

   extracting segments of the signal of interest at time instants defined by the zero crossings;
   aligning in time the extracted segments to generate time-aligned segments;
   combining the time-aligned segments; and
   calculating an average of the time-aligned segments.

3. Apparatus according to Claim 1 or Claim 2, wherein the crosslation calculator is arranged to perform each crosslation calculation in accordance with the crosslation function $C(\tau)$:

$$C(\tau) = \frac{1}{K}\sum_{k=1}^{K}(-1)^{\psi}s(t-t_k) = \frac{1}{K}\sum_{k=1}^{K}(-1)^{\psi}s_k(\tau)$$

where:

$t_1$, $t_2$, .....$t_k$, ...$t_K$ are the time instants of the zero crossings;;
for a zero-crossing occurring at $t_k$, the trajectory of the signal of interest $s_k(\tau) = s(t_k + \tau)$;
$\tau$ is relative time such that each trajectory $s_k(\tau)$ is a time-shifted copy of the signal of interest, with the time shift being given by $\tau = t - t_k$;
$\{s(t_k + \tau); k = 1, 2, ...K\}$ are mapped by the time shifts into another equivalent set of trajectories $\{s_k(\tau); k = 1, 2, ...K\}$;
$\psi = 0$, if the zero crossing is an upcrossing of the zero level
$\psi = 1$, if the zero crossing is a downcrossing of the zero level.

4. Apparatus according to any preceding claim, wherein the calculation unit is arranged to:

calculate the difference between the first and second crosslation results;
calculate the sum of the third and fourth crosslation results; and
generate each representation of the characteristics of the system in dependence upon the calculated difference and the calculated sum.

5. Apparatus according to any preceding claim wherein the calculation unit is arranged to calculate:

a first representation of the characteristics of the system representing the attenuation and delay of the system on the probe signal; and
a second representation of the characteristics of the system representing the phase of the first representation.

6. Apparatus according to Claim 5, wherein the calculation unit is arranged to:

calculate the first representation using an additive combination of the calculated sum and the calculated difference; and
calculate the second representation using a ratio of the calculated sum and the calculated difference.

7. Apparatus according to Claim 5 or Claim 6, further comprising a data analyser operable to compare the first representation and the second representation against reference data and to output at least one result in dependence upon the comparisons.

8. Apparatus according to any preceding claim, further comprising a timing signal generator operable to determine timings of zero upcrossings only or zero downcorssings only of the first and second probe signals and operable to generate a binary signal in which a rising edge defines a determined timing of one of the first and second probe signals and a falling edge defines a determined timing of the other of the first and second probe signals, and wherein the crosslation calculator is arranged to determine the zero crossings for the crosslation calculations from the binary signal.

9. A method of determining characteristics of a system, the method comprising:

splitting a probe signal for probing a system under test into first and second probe signal components such that the second probe signal component is a phase-shifted version of the first probe signal component with a phase difference $\theta$ satisfying $\theta$ MOD $180° < > 0°$;
detecting a response signal from the system under test comprising a response of the system to the probe signal, and splitting the response signal into first and second response signal components such that the second response signal component is a phase-shifted version of the first response signal component with a phase difference corresponding to the phase difference of the first and second probe signal components;
extracting segments of the first response signal component at time instants defined by zero crossings of the second probe signal component, aligning in time the extracted segments to generate time-aligned segments, combining the time-aligned segments and calculating an average of the time-aligned segments to generate a first analysis result;
extracting segments of the second response signal component at time instants defined by zero crossings of the first probe signal component, aligning in time the extracted segments to generate time-aligned segments, combining the time-aligned segments and calculating an average of the time-aligned segments to generate a second analysis result;
extracting segments of the first response signal component at time instants defined by zero crossings of the first probe signal component, aligning in time the extracted segments to generate time-aligned segments, combining the time-aligned segments and calculating an average of the time-aligned segments to generate a third analysis result;

extracting segments of the second response signal component at time instants defined by zero crossings of the second probe signal component, aligning in time the extracted segments to generate time-aligned segments, combining the time-aligned segments and calculating an average of the time-aligned segments to generate a fourth analysis result; and

combining the first, second, third and fourth analysis results to generate at least one representation of the characteristics of the system.

**10.** A method according to Claim 9, wherein each analysis result is generated in accordance with the equation:

$$C(\tau) = \frac{1}{K}\sum_{k=1}^{K}(-1)^{\psi}s(t-t_k) = \frac{1}{K}\sum_{k=1}^{K}(-1)^{\psi}s_k(\tau)$$

where:

$t_1, t_2, .....t_k, ...t_K$ are the time instants of the zero crossings;;

for a zero-crossing occurring at $t_k$, the trajectory of the signal of interest $s_k(\tau) = s(t_k + \tau)$;

$\tau$ is relative time such that each trajectory $s_k(\tau)$ is a time-shifted copy of the signal of interest, with the time shift being given by $\tau = t - t_k$;

$\{s(t_k + \tau); k = 1, 2, ...K\}$ are mapped by the time shifts into another equivalent set of trajectories $\{s_k(\tau); k = 1, 2, ...K\}$;

$\psi = 0$, if the zero crossing is an upcrossing of the zero level

$\psi = 1$, if the zero crossing is a downcrossing of the zero level.

**11.** A method according to Claim 9 or Claim 10, wherein the at least one representation of the characteristics of the system is generated by:

calculating the difference between the first and second analysis results;

calculating the sum of the third and fourth analysis results; and

generating each representation of the characteristics of the system in dependence upon the calculated difference and the calculated sum.

**12.** A method according to any of Claims 9 to 11, wherein:

a first representation of the characteristics of the system is calculated representing the attenuation and delay of the system on the probe signal; and

a second representation of the characteristics of the system is calculated representing the effect of the system on the phase of the frequency components of the probe signal.

**13.** A method according to Claim 12, wherein:

the first representation is calculated using an additive combination of the calculated difference and the calculated sum; and

the second representation is calculated using a ratio of the calculated difference and the calculated sum.

**14.** A method according to Claim 12 or Claim 13, further comprising comparing the first representation and the second representation against reference data and outputting at least one result in dependence upon the comparisons.

**15.** A method according to any of Claims 9 to 14, further comprising determining timings of zero upcrossings alone or zero downcrossings alone of the first and second probe signals and generating a binary signal in which a rising edge defines a determined timing of one of the first and second probe signals and a falling edge defines a determined timing of the other of the first and second probe signals; and wherein the zero crossings for extracting the segments of the first and second response signals are determined from the binary signal.

a)

$\{s_k(\tau)\}$

$\tau$

b)

$C(\tau)$

$\tau$

Fig. 1

Fig. 2

Fig. 3

Fig. 4

Fig. 5

EP 2 287 748 A1

Fig. 6

26

**Europäisches Patentamt**
**European Patent Office**
**Office européen des brevets**

# EUROPEAN SEARCH REPORT

Application Number

EP 09 16 8393

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | LONG G ET AL: "A new complex system identification method and its application to echo canceller fast initialization" 19900403; 19900403 - 19900406, 3 April 1990 (1990-04-03), pages 1671-1674, XP010641667 * section II, paragraphs 1-5 * | 1-15 | INV. G06F17/15 H04B10/08 H04S3/00 |
| Y,D | US 6 539 320 B1 (SZAJNOWSKI WIESLAW JERZY [GB] ET AL) 25 March 2003 (2003-03-25) * column 3, line 7 - line 32 * * column 4, line 64 - column 5, line 12; figure 6 * | 1-15 | |
| Y,D | US 2004/059517 A1 (SZAJNOWSKI WIESLAW JERZY [GB]) 25 March 2004 (2004-03-25) * paragraphs [0004], [0005], [0014], [0042], [0092]; figures 3,5,6,7 * | 3 | |
| A | | 1,2,4-15 | |
| A | US 3 718 813 A (WILLIAMS O ET AL) 27 February 1973 (1973-02-27) * column 1 - column 3; figure 2 * | 1-15 | TECHNICAL FIELDS SEARCHED (IPC) |
| A | US 4 067 060 A (POUSSART DENIS ET AL) 3 January 1978 (1978-01-03) * column 1; figure 3 * | 1-15 | G06F H04B H04S |
| A | US 6 236 371 B1 (BECK BRIAN C [US]) 22 May 2001 (2001-05-22) * column 2 - column 5; figures 1,5 * | 1-15 | |
| A | US 4 081 858 A (KOBLASZ ARTHUR J ET AL) 28 March 1978 (1978-03-28) * column 1 - column 2; figure 1 * | 1-15 | |

-/--

The present search report has been drawn up for all claims

| Place of search | Date of completion of the search | Examiner |
|---|---|---|
| Berlin | 4 June 2010 | Virnik, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Application Number

EP 09 16 8393

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | STAN G-B ET AL: "COMPARISON OF DIFFERENT IMPULSE RESPONSE MEASUREMENT TECHNIQUES" JOURNAL OF THE AUDIO ENGINEERING SOCIETY, AUDIO ENGINEERING SOCIETY, NEW YORK, NY, US, vol. 50, no. 4, 1 April 2002 (2002-04-01), pages 249-262, XP001130080 ISSN: 1549-4950 * abstract, section 1 * ----- | 1-15 | |
| A | BORISH J ET AL: "AN EFFICIENT ALGORITHM FOR MEASURING THE IMPULSE RESPONSE USING PSEUDORANDOM NOISE" JOURNAL OF THE AUDIO ENGINEERING SOCIETY, AUDIO ENGINEERING SOCIETY, NEW YORK, NY, US, vol. 31, no. 7, 1 July 1983 (1983-07-01), pages 478-488, XP009060089 ISSN: 0004-7554 * abstract; section II * ----- | 1-15 | |

TECHNICAL FIELDS
SEARCHED (IPC)

The present search report has been drawn up for all claims

| Place of search | Date of completion of the search | Examiner |
|---|---|---|
| Berlin | 4 June 2010 | Virnik, Elena |

EPO FORM 1503 03.82 (P04C01)

**ANNEX TO THE EUROPEAN SEARCH REPORT
ON EUROPEAN PATENT APPLICATION NO.**

EP 09 16 8393

This annex lists the patent family members relating to the patent documents cited in the above-mentioned European search report.
The members are as contained in the European Patent Office EDP file on
The European Patent Office is in no way liable for these particulars which are merely given for the purpose of information.

04-06-2010

| Patent document cited in search report | | Publication date | Patent family member(s) | | | Publication date |
|---|---|---|---|---|---|---|
| US 6539320 | B1 | 25-03-2003 | AT | 346328 | T | 15-12-2006 |
| | | | AU | 1882400 | A | 31-07-2000 |
| | | | DE | 69934142 | T2 | 20-09-2007 |
| | | | EP | 1145084 | A1 | 17-10-2001 |
| | | | ES | 2277457 | T3 | 01-07-2007 |
| | | | WO | 0039643 | A1 | 06-07-2000 |
| | | | GB | 2345149 | A | 28-06-2000 |
| | | | JP | 3706305 | B2 | 12-10-2005 |
| | | | JP | 2002533732 | T | 08-10-2002 |
| | | | JP | 2005249800 | A | 15-09-2005 |
| US 2004059517 | A1 | 25-03-2004 | CN | 1495414 | A | 12-05-2004 |
| | | | DE | 60224263 | T2 | 11-12-2008 |
| | | | EP | 1378854 | A1 | 07-01-2004 |
| | | | JP | 2004163889 | A | 10-06-2004 |
| US 3718813 | A | 27-02-1973 | NONE | | | |
| US 4067060 | A | 03-01-1978 | CA | 1064619 | A1 | 16-10-1979 |
| US 6236371 | B1 | 22-05-2001 | NONE | | | |
| US 4081858 | A | 28-03-1978 | NONE | | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7495450 B
- US 7532011 B
- US 7120555 B
- US 6539320 B
- US 7216047 B
- EP 09154247 A
- EP 09154245 A
- US 6859041 B
- WO 03096503 A
- US 7515089 B

**Non-patent literature cited in the description**

- **Guy-Bart Stan et al.** Comparison of Different Impulse Response Measurement Techniques. *J. Audio Eng. Soc.,* April 2002, vol. 50
- **F. Gran ; J. A. Jensen.** Designing Waveforms for Temporal Encoding Using a Frequency Sampling Method. *IEEE Trans. Ultrason., Ferroelect., Freq. Contr.,* October 2007, vol. 54
- **P. Smith ; C. Furse ; J. Gunther.** Analysis of Spread Spectrum Time Domain Reflectometry for Wire Fault Location. *IEEE Sensor Journal,* December 2005, vol. 5
- **K. M. O'Connor ; C. H. Dowding.** GeoMeasurements by Pulsing TDR Cables and Probes. CRC Press, 1999
- **J. M. Goodman.** *HF Communications - Science and Technology,* 1992
- **X. E. Gros.** *NDT Data Fusion,* 1997
- **L. L. Beranek.** Concert Halls and Opera Houses: Music, Acoustics, and Architecture. Springer, 2004
- **T. Hidaka ; L. L. Beranek.** Objective and subjective evaluation of twenty-three opera houses in Europe, Japan and the Americas. *J. Acoust. Soc. Am.,* January 2000, vol. 107, 368-383